# EUROPEAN PATENT APPLICATION

(11) **EP 4 632 935 A1**
(43) Date of publication of application: **15.10.2025**
(21) Application number: 23933811.4
(22) Date of filing: 14.11.2023
(51) Int. Cl.: H01M 50/449, H01M 50/409, H01M 50/403, H01M 50/40

(54) **COMPOSITE SEPARATOR, AND PREPARATION METHOD THEREFOR AND USE THEREOF**

(30) Priority: 17.04.2023 CN 202310409508
(71) Applicant: Contemporary Amperex Technology Co., Limited, Ningde, Fujian 352100 (CN)
(72) Inventor: XIA, Zhonghui, Ningde, Fujian 352100 (CN); WANG, Zhaoguang, Ningde, Fujian 352100 (CN); YANG, Jianrui, Ningde, Fujian 352100 (CN); WANG, Yaohui, Ningde, Fujian 352100 (CN); SUN, Chengdong, Ningde, Fujian 352100 (CN); HUANG, Siying, Ningde, Fujian 352100 (CN); OUYANG, Chuying, Ningde, Fujian 352100 (CN)
(74) Representative: Kraus & Lederer PartGmbB
(86) International application number: PCT/CN2023/131555
(87) International publication number: WO 2024/216944

(57) **Abstract**

Disclosed in the present application are a composite separator, and a preparation method therefor and the use thereof. The composite separator comprises a plurality of laminated base film layers and at least one modified layer arranged between two adjacent base film layers, wherein the raw material components of the modified layer include a fullerene material. In the present application, using the fullerene material as the modified layer between two adjacent base film layers not only can improve the ion and electron conductivity of fullerene, but also can improve the porosity of fullerene, and improve the characteristics, such as liquid absorption capacity, wettability, air permeability and adhesion performance, of fullerene. Applying the fullerene material with high performance to a middle layer of the composite separator as a modified layer not only can improve the comprehensive properties, such as mechanical properties, heat resistance, and ion and electron conductivity, of the composite separator, but also can satisfy the use requirements with a small amount of the fullerene material, and can reduce the thickness of the modified layer in the composite separator, such that the lightweight design of the composite separator can be achieved.

## Description

The present application claims priority to the Chinese patent application No. 202310409508.6 filed to the China National Intellectual Property Administration on April 17, 2023 and entitled "COMPOSITE SEPARATOR, AND PREPARATION METHOD THEREFOR AND USE THEREOF", the entire content of which is incorporated into the present application by reference.

### TECHNICAL FIELD

The present application relates to the technical field of batteries, and particularly relates to a composite separator and a preparation method therefor and the use thereof.

### BACKGROUND

With the continuous advancement and development of lithium-ion battery technology, they have been applied to many fields such as digital electronic products, energy storage, power, and new energy vehicles. Lithium-ion batteries themselves have the advantages of a light weight, a high energy density, and excellent high-rate charge/discharge performance, it is still desired to further improve the performance and safety of lithium-ion batteries. One of the important factors that determine the performance and safety of a lithium-ion battery is the performance of its electrode material, and the other important factor is the battery separator. A separator is an electrically insulating film with a porous structure, functions to isolate the positive and negative electrodes of the battery and prevent electrons in the battery from passing through freely, but at the same time allow free passage of ions between the positive and negative electrodes. As a key component of lithium-ion battery cells, the performance of the separator determines the battery's interface structure, internal resistance, etc., and directly affects the properties of the battery, such as capacity, cycling and safety performance. A separator with excellent performance has an important function to improve the battery's comprehensive performance. Therefore, the development of high-performance separators has become an important direction for improving the performance of lithium batteries, and especially the safety of separators has become a focus of attention.

Currently, high-performance battery separators not only need to have excellent electrical insulation, high ion permeability, good mechanical property, solvent resistance, high temperature resistance, high wettability property, etc., but also have an important function to improve the energy density of the battery cell if the weight of the separator itself can be reduced, thus facilitating to the lightweighting of the battery cell. However, if the thickness of the separator is reduced, it becomes difficult to balance the properties, such as mechanical property, and heat resistance, of the separator.

### TECHNICAL PROBLEM

One object of the embodiments of the present application is to provide a composite separator to solve the technical problem that it is difficult for the existing separators to achieve lightweighting while ensuring the performance of the separator.

### TECHNICAL SOLUTION

In the embodiments of the present application, the technical solutions as follows are used:
In a first aspect, a composite separator is provided, wherein the composite separator comprises a plurality of laminated base film layers and at least one modified layer provided between two of adjacent base film layers; raw material components of the modified layer comprise a fullerene material.

In some embodiments, the raw material components of the modified layer comprise fullerene modified by at least one of a doping heteroatom, modification with an organic functional group, compounding an inorganic material, and pore-making treatment.

In some embodiments, the thickness of the modified layer is 5µm.

In some embodiments, the thickness of the modified layer is 3µm.

In some embodiments, the thickness of the modified layer is 0.5µm-2µm.

In some embodiments, the thickness of the base film layer is 3µm-7µm.

In some embodiments, the heteroatom includes non-metallic elements of the main groups IIIA-VIA.

In some embodiments, the heteroatom includes at least one of N, S, O, B, and P.

In some embodiments, the organic functional group includes at least one of a pyrrole group, a thiophene group, and an aniline group.

In some embodiments, the inorganic material comprises a metal oxide.

In some embodiments, the inorganic material includes at least one of MoO₂, MgO, and Al₂O₃.

In some embodiments, the pore-making treatment is performed by at least one process including pore-making with a pore-making agent, chemical etching, and a template method.

In some embodiments, the average particle size of the fullerene material is 0.1µm-5µm.

In some embodiments, in the fullerene material, the fullerene includes at least one of C₂₀, C₆₀, C₇₀, C₇₆, and C₈₀.

In some embodiments, the shape of the fullerene material includes at least one of spherical, ellipsoidal, cylindrical, and tubular shapes.

In some embodiments, the specific surface area of the fullerene material is 100 m²/g-500 m²/g.

In some embodiments, the total pore volume of the fullerene material is 0.01cm³/g-0.5cm³/g.

In some embodiments, the average mesopore size of the fullerene material is 2nm-20nm.

In some embodiments, the modified layer further includes a binder.

In some embodiments, the porosity of the base film layer is 30%-70%.

In some embodiments, the average pore size of the base film layer is 100 nm-800 nm.

In some embodiments, the surface density of the base film layer is 2g/m²-10g/m².

In some embodiments, the base film layer comprises at least one material of polypropylene, polyethylene, glass fibers and polyvinylidene fluoride.

In some embodiments, the air permeability of the composite separator is 300 s/(100 cc)-500 s/(100 cc).

In some embodiments, the composite separator has a transverse tensile strength of not less than 1000 kg/cm², and a longitudinal tensile strength of not less than 1200 kg/cm².

In some embodiments, the composite separator has a transverse tensile strength of not more than 1700kg/cm², and a longitudinal tensile strength of not more than 1500kg/cm².

In some embodiments, the thickness of the composite separator is not more than 15µm.

In some embodiments, the thickness of the composite separator is 7µm-15µm.

In some embodiments, the mass percentage of the modified layer in the composite separator is 10%-20%.

In a second aspect, a method for preparing a composite separator is provided, the method including the following steps:
preparing a fullerene slurry;
obtaining at least two base film layers, and preparing the fullerene slurry as a modified layer between two of adjacent base film layers to obtain the composite separator.

In some embodiments, a step of preparing the fullerene slurry comprises: after modifying the fullerene, mixing the fullerene material with a dispersant, a binder and a solvent to form a mixed slurry to obtain the fullerene slurry.

In some embodiments, the process for modifying the fullerene comprises at least one of: doping with a heteroatom, modification with an organic functional group, compounding an inorganic material, and pore-making treatment.

In some embodiments, the heteroatom includes at least one of N, S, O, B, and P.

In some embodiments, the organic functional group includes at least one of a pyrrole group, a thiophene group, and an aniline group.

In some embodiments, the inorganic material includes at least one of MoO₂, MgO, and Al₂O₃.

In some embodiments, the pore-making treatment is performed by using at least one process including pore-making with a pore-making agent, chemical etching, and a template method.

In some embodiments, the mass ratio of the fullerene material, the binder and the dispersant in the fullerene slurry is (60-90):(5-20):(1-20).

In some embodiments, in the fullerene slurry, the ratio of the total mass of the fullerene material, the binder and the dispersant to the mass of the solvent is (0.1-0.6):1.

In some embodiments, the binder includes at least one of carboxymethyl cellulose, styrene butadiene rubber, polyacrylonitrile, polyvinyl alcohol, polytetrafluoroethylene, polyvinylidene fluoride, and polyimide.

In some embodiments, the dispersant includes at least one of polyacrylate, polyacrylamide, and long chain fatty acids.

In some embodiments, the solvent includes at least one of deionized water, N-methyl pyrrolidone, ethanol, dimethylformamide, dimethylacetamide, acetone, and dichloromethane.

In some embodiments, the preparation of the modified layer comprises the steps of: coating the fullerene slurry on one side surface of one of the base film layers, laminating the other base film layer to the surface coated with the slurry, drying and curing to form the modified layer between the two base film layers.

In some embodiments, the thickness of the modified layer is 0.5µm-2µm.

In some embodiments, the average particle size of the fullerene material is 0.1µm-5µm.

In some embodiments, in the fullerene material, the fullerene includes at least one of C₂₀, C₆₀, C₇₀, C₇₆, and C₈₀.

In some embodiments, the shape of the fullerene material includes at least one of spherical, ellipsoidal, cylindrical, and tubular shapes.

In some embodiments, the porosity of the base film layer is 30%-70%.

In some embodiments, the average pore size of the base film layer is 100 nm-800 nm.

In some embodiments, the surface density of the base film layer is 2g/m²-10g/m².

In some embodiments, the thickness of the base film layer is 3µm-7µm.

In some embodiments, the base film layer comprises at least one material of polypropylene, polyethylene, glass fibers and polyvinylidene fluoride.

In some embodiments, the air permeability of the composite separator is 300 s/(100 cc)-500 s/(100 cc).

In some embodiments, the composite separator has a transverse tensile strength of not less than 1000 kg/cm², and a longitudinal tensile strength of not less than 1200 kg/cm².

In some embodiments, the thickness of the composite separator is not more than 15µm.

In some embodiments, the mass percentage of the modified layer in the composite separator is 10%-20%.

In a third aspect, a battery cell is provided, wherein the battery cell comprises a positive electrode, a negative electrode, a separator and an electrolyte, wherein the separator comprises the composite separator described above, or the composite separator prepared by the method described above.

In a fourth aspect, a battery module is provided, wherein the battery module comprises a plurality of battery cells described above.

In a fifth aspect, a battery pack is provided, wherein the battery pack comprises a plurality of the battery modules described above.

In a sixth aspect, an electrical device is provided, wherein the electrical device comprises a battery cell described above, or a battery module described above, or a battery pack described above.

### Beneficial effects

The composite separator provided in embodiments of the present application has the beneficial effect that a fullerene material having properties, such as excellent mechanical rigidity, good ion and electron conductivity, thermal conductivity, liquid absorption capacity, wettability, air permeability, and a light weight is used as a modified layer in the composite separator. It is beneficial to improve the comprehensive properties of the composite separator, such as mechanical property, heat resistance, ion and electron conductivity, and can meet the application requirements with a small amount of fullerene material, and can reduce the thickness of the modified layer in the composite separator, thus facilitating the lightweight design of the composite film. In addition, the modified layer is arranged between two adjacent base film layers. The base film layers on both sides not only can provide a substrate for the modified layer, but also can have the supporting and protective functions, which is beneficial to maintaining the stability of the modified layer and avoiding the powder shedding of the modified layer during the charging and discharging process, which affects the stability of the electrochemical performance of the battery. At the same time, the amount of bonding materials and the like in the modified layer can be reduced, avoiding introducing too much other materials to affect the air permeability and ion migration efficiency of the composite separator, and facilitating to further reduce the thickness of the modified layer, reduce the overall thickness of the composite separator, and achieve lightweighting.

The preparation method for a composite separator provided in an embodiment of the present application has the beneficial effect that the prepared fullerene slurry is made into a modified layer between two base film layers, thereby obtaining a composite separator with laminated base film layer-modified layer-base film layer. The composite separator has a simple preparation process and is easy to operate, and is suitable for industrial large-scale production and application. The prepared composite separator introduces a fullerene-modified layer with properties, such as excellent mechanical rigidity, good ion and electron conductivity, thermal conductivity, strong stability, and wettability in the middle of the base film layer, thereby improving the comprehensive properties of the composite separator, such as mechanical property, heat resistance, ion and electron conductivity, and a liquid absorbency. Furthermore, based on the structural design of the fullerene-modified layer as an intermediate layer, the composite separator can be designed to be lightweighting.

The battery cell provided in an embodiment of the present application has the beneficial effect that the separator in the battery cell comprises the composite separator provided in the first aspect, or the composite separator prepared by the method provided in the second aspect. As the separator, the above-mentioned composite separator which has properties, such as excellent mechanical property, heat resistance, wettability, stability, ion and electron conductivity and can be designed to be lightweighting, can be used. Therefore, the rate performance, energy density, cycle stability and safety performance of the battery cell are improved.

The battery module provided in an embodiment of the present application has the beneficial effect that the battery module comprises a plurality of battery cells described above. Since the battery module comprises battery cells having the above-mentioned properties such as high rate performance, energy density, cycling stability and safety performance, the properties, such as rate performance, energy density, cycling stability and safety of the battery module are also improved.

The battery pack provided in an embodiment of the present application has the beneficial effect that the battery pack comprises a plurality of the battery modules described above. Since the battery pack includes battery modules having the above-mentioned properties such as high rate performance, energy density, cycling stability and safety performance, the properties, such as rate performance, energy density, cycling stability and safety of the battery pack are also improved.

The electrical device provided in embodiments of the present application has the beneficial effect that the electrical device comprises a battery cell described above, or a battery module described above, or a battery pack described above. Since the electrical device comprises the above-mentioned battery cells, battery modules or battery packs with performance such as high rate performance, energy density, cycling stability and safety performance, the power safety and stability of the electrical device are improved.

### BRIEF DESCRIPTION OF DRAWINGS

In order to explain the technical solution in the embodiments of the present application more clearly, the accompanying drawings needed in the description of the embodiments or demonstration technical descriptions will be briefly introduced below. Obviously, the accompanying drawings in the following description are only some embodiments of the application. For a person of ordinary skill in the art, other drawings can be obtained according to these accompanying drawings without creative work.
Fig. 1 is a flow chart of a method for preparing a composite separator provided in an example of the present application;
Fig. 2 is a schematic structural view I of a composite separator according to an example of the present application;
Fig. 3 is a schematic structural view II of a composite separator according to an example of the present application;
Fig. 4 is a schematic structural view III of a composite separator according to an example of the present application;
Fig. 5 is a schematic structural view IV of a composite separator according to an example of the present application;
FIG. 6 is a schematic structural view of an embodiment of a battery cell according to an example of the present application;
FIG. 7 is an exploded schematic view of the battery cell shown in FIG. 6;
FIG. 8 is a schematic structural view of an embodiment of a battery module according to an example of the present application;
FIG. 9 is a schematic structural view of an embodiment of a battery pack according to an example of the present application;
FIG. 10 is an exploded schematic structural view of the battery pack shown in FIG. 9; and
FIG. 11 is a schematic view of an embodiment of an electrical apparatus comprising the battery cell, battery module or battery pack of an example of the present application as a power source.

Reference numerals in Detailed Description are as follows:
05-Battery cell; 51-Case; 52-Electrode assembly; 53-Cover plate;
06-Battery module;
07-Battery pack, 71-Box, 72-Lower box.

### DETAILED DESCRIPTION

In order to make the object, technical solutions and advantages of the present application clearer, the present application will be described in further detail below in conjunction with the drawings and examples. It should be understood that the specific embodiments described herein are merely used to explain the present invention but are not intended to limit the present application.

In the present application, the term "and/or" is an association relation describing associated objects, which means that there may be three relations, for example, A and/or B may represent the situations: A exists alone, both A and B exist, and B exists alone. A and B can be singular or plural. The character "/" generally indicates that the relationship between the preceding and following objects is an "or".

**In** the present application, "at least one" means one or more, and "more than one" means two or more. "At least one of the following" or similar expressions refers to any combination of these items, including any combination of single or plural items. For example, "at least one of a, b, or c", or "at least one of a, b and c", can both mean: a, b, c, a-b (i.e. a and b), a-c, b-c, or a-b-c, where a, b, c can be single or plural, respectively.

It should be understood that in the various embodiments of the present application, the magnitude of the serial numbers of the above processes does not imply the order of execution, some or all steps can be operated in parallel or in order and the execution order of the processes should be determined by their functions and internal logic, and should not constitute any limitation on the implementation process of the embodiments of the present application.

The terms used in the embodiments of the present application are merely for the purpose of describing specific embodiments, but are not intended to limit the present application. The terms "a/an", "the" and "this" of singular forms used in the embodiments and the appended claims of the present application are also intended to include plural forms, unless otherwise specified in the context clearly.

The weights of relevant components mentioned in the specification of embodiments of the present application not only can indicate the contents of the components, but also can denote the proportional relation of the weights of the components. Therefore, the specific contents of relevant components scaled up or down in accordance with those defined in the specification of the embodiments of the present application fall within the scope disclosed in the specification of the embodiments of the present application. Specifically, the mass described in the examples in the specification of the present application may be in mass units known in the chemical industry such as µg, mg, g, kg, etc.

In the description of the embodiments of the present application, the technical terms "first," "second," and the like are used only to distinguish between different objects, and are not to be understood as indicating or implying a relative importance or implicitly specifying the number, particular order, or primary and secondary relation of the technical features indicated. **In** the description of the embodiments of the present application, the meaning of "a plurality of" is two or more, unless otherwise explicitly and specifically defined.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is simply a description of an association of associated objects, which indicates that there may exist three relationships, for example, A and/or B may represent three situations: A exists alone, both A and B exist, and B exists alone. Moreover, the character "/" herein generally indicates that the context objects are in an "or" relationship.

In the descriptions of the embodiments of the present application, the term "multiple" refers to more than two (including two), and similarly, "multiple groups" refers to more than two groups (including two groups); and "multiple pieces" refers to more than two pieces (including two pieces).

In order to explain the technical solutions provided by the present application, specific accompanying drawings and embodiments will be described in detail below.

Currently, from the perspective of development of the market situations as a key component of lithium-ion battery cells, the performance of the separator determines the battery's interface structure, internal resistance, etc., and directly affects the properties of the battery, such as capacity, cycling and safety performance. A separator with excellent performance has an important function to improve the battery's comprehensive performance. The main function of the battery separator is to separate the positive and negative plates in the battery to prevent the positive and negative plates from making a direct contact and causing a short circuit. At the same time, since the separator has a large number of through-holes, the positive and negative ions in the battery can pass freely through the micropores, migrating between the positive and negative plates to form an internal conductive circuit in the battery, while the electrons migrate between the positive and negative electrodes through the external circuit to form an electric current for use by electrical device.

High-performance battery separators not only need to have excellent electrical insulation, high ion permeability, good mechanical property, solvent resistance, high temperature resistance, high wettability property, etc., but also have an important function to improve the energy density of the battery cell if the weight of the separator itself can be reduced. The thickness of the separator is related to the internal resistance. The thinner the separator, the smaller the internal resistance, thus achieving high-power charging and discharging. The thickness of the separator needs to be reduced as much as possible while maintaining a certain mechanical strength, especially for consumable lithium-ion batteries. With the growing demand for portable products such as mobile phones, laptops, and digital cameras, the batteries used have required thinner separators. In addition, for power batteries, the thinner the separator, the lower the resistance encountered by the solvated lithium ions when passing through, the better the ion conductivity, and the lower the impedance. Moreover, the thicker the separator, the fewer layers that can be wound, and the lower the corresponding capacity. However, when the separator is too thin, its liquid retention capacity and electronic insulation will be reduced, which will also have an adverse effect on battery performance. Therefore, the separator needs to achieve lightweighting and comprehensive properties such as high mechanical property, heat resistance, and wettability. However, if the thickness of the separator is directly reduced, it becomes difficult to balance the properties, such as mechanical property and heat resistance, of the separator.

Based on the above considerations, in order to solve the problem that it is difficult for the separator to achieve lightweighting while ensuring the properties, such as mechanical property, heat resistance, and wettability of the separator, a composite separator is proposed, in which a fullerene material is used as a fullerene intermediate functional layer and applied between multiple base film layers to form a composite separator.

**In** such a composite separator, the fullerene material used in the modified layer not only has the characteristics, such as excellent mechanical rigidity, excellent ion and electron conductivity, thermal conductivity, stability, and good nonlinear optical property, of the fullerene itself in the present application, but also after modification, the properties, such as its ion and electron conductivity, porosity, liquid absorption capacity, wettability, air permeability, and adhesion performance are further improved. By applying the fullerene material with high performance between the base film layers, it is beneficial to improve the comprehensive properties of the composite separator, such as mechanical property, heat resistance, ion and electron conductivity, and can meet the application requirements with a small amount of fullerene material, and can reduce the thickness of the modified layer in the composite separator, thus facilitating the lightweight design of the composite film. The modified layer is arranged between two adjacent base film layers. The base film layers on both sides not only can provide a substrate for the modified layer, but also can have the supporting and protective functions, which is beneficial to maintaining the stability of the modified layer, can reduce the amount of bonding materials and the like in the modified layer, avoid introducing too much other materials to affect the air permeability and ion migration efficiency of the composite separator, and help further reduce the thickness of the modified layer, reduce the overall thickness of the composite separator, and help achieve lightweighting.

Therefore, the composite separator provided in the present application not only has the characteristics, such as excellent electrical insulation, high ion permeability, good mechanical property, solvent resistance, high temperature resistance, and high wettability property, but also can reduce the weight of the separator itself and achieve lightweight design. Applying the separator to battery cells is beneficial to improving battery energy density and achieving high-power charging and discharging, and is especially suitable for demands for consumable lithium-ion batteries in portable products.

For ease of description, the following embodiments of the present application are illustrated with a composite separator and a preparation method therefor and the use thereof as examples.

In a first aspect, a composite separator is provided in an embodiment of the present application, wherein the composite separator comprises a plurality of laminated base film layers and at least one modified layer provided between two of adjacent base film layers; raw material components of the modified layer comprise a fullerene material.

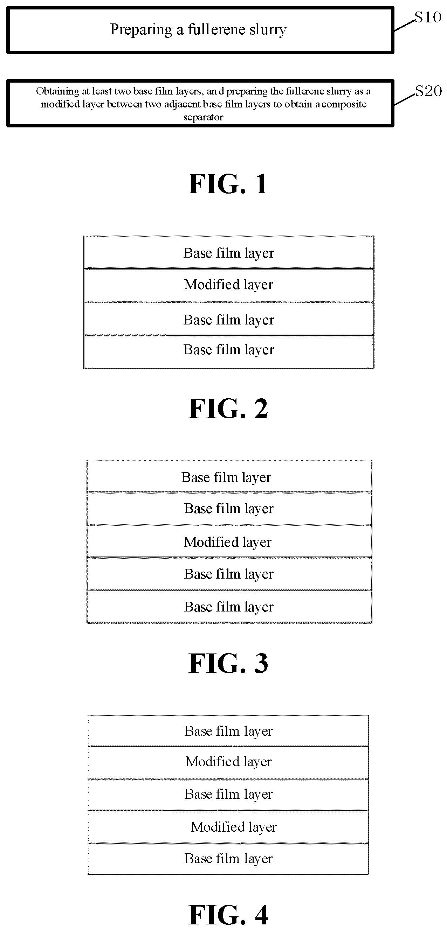

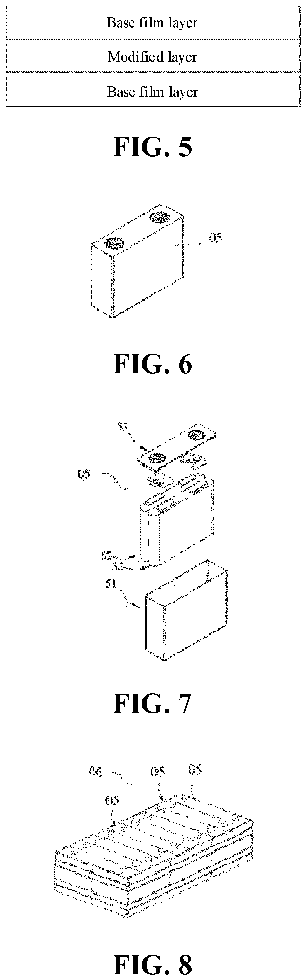

**In** the composite separator of the embodiment of the present application, a base film layer refers to a material layer used to separate the positive and negative electrode plates in the battery, prevent the positive and negative electrode plates from directly contacting each other to cause a short circuit, and prevent electrons in the battery from passing freely, but at the same time allow ions to pass freely between the positive and negative electrodes. The composite separator of the embodiment of the present application can be a laminated composite structure of multiple base film layers and at least one modified layer. For example, as shown in Figure 2, the structure of the composite separator can be base film layer-modified layer-base film layer-base film layer, or, as shown in Figure 3, base film layer-base film layer-modified layer-base film layer-base film layer, etc. The composite separator may also be a laminated composite structure of multiple base film layers and multiple modified layers. For example, as shown in FIG. 4, the structure of the composite separator may be base film layer-modified layer-base film layer-modified layer-base film layer. The composite separator may also be a composite structure of two base film layers and an intermediate modified layer, as shown in FIG. 5, and the specific structure may be base film layer-modified layer-base film layer. In the above description, "-" indicates the connection relationship in a laminated manner between the film layers. The structure and number of layers of the composite separator can be flexibly designed according to actual application needs to meet the requirements of different battery systems for separator performance.

Thus, the composite separator of the embodiment of the present application has the following advantages:
First, fullerene has a hollow molecular structure composed of carbon. Due to its unique zero-dimensional structure, fullerene has physical and chemical properties, such as excellent mechanical rigidity, excellent ion and electron conductivity, thermal conductivity, and good nonlinear optical property, and is lightweighting. The application of fullerene in composite separators not only can improve the properties, such as mechanical property, heat resistance, and stability of the composite separators, but also can help to reduce the weight of the composite separators, which is beneficial for the separators to be lightweighting while having excellent mechanical and electrochemical properties.

Secondly, in order to form tubes or spheres, the sp hybrid orbitals of fullerene are bent, which creates a large bond angle tension. After the carbon-carbon double bond is saturated through the reaction, the bond angle tension can be released. The change in the atomic orbital causes the bond to change from approximately 120° of sp to about 109.5° of sp, reducing the Gibbs free energy of fullerene, thus making fullerene very stable. The modified layer is applied between two base film layers, such that the composite separator does not easily react with the electrolyte during the charge and discharge process, thereby better improving the stability of the separator.

Thirdly, the modified layer is arranged between two adjacent base film layers. The base film layers on both sides not only can provide a substrate for the modified layer, but also can have the supporting and protective functions, which is beneficial to maintaining the stability of the modified layer and avoiding the powder shedding of the modified layer during the charging and discharging process, which affects the stability of the electrochemical performance of the battery. At the same time, the amount of bonding materials and the like in the modified layer can be reduced, avoiding introducing too much other materials to affect the air permeability and ion migration efficiency of the composite separator, and facilitating to further reduce the thickness of the modified layer, reduce the overall thickness of the composite separator, and achieve lightweighting.

In some possible implementations, the raw material components of the modified layer comprise fullerene modified by at least one of a doping heteroatom, modification with an organic functional group, compounding an inorganic material, and pore-making treatment.

The fullerene in the embodiments of the present application can result in chemical reactions such as oxidation, reduction, polymerization, photosensitization, affinity addition, electrophilic addition, etc. The fullerene can form single addition products or multiple addition products. By using functionally modified fullerene, not only can the ion and electron conductivity of fullerene be improved, but also the porosity of fullerene can be improved, and the liquid absorption capacity, wettability, air permeability, adhesion performance, etc., of fullerene can be improved, such that it can meet the requirements of the separator for properties, such as air permeability and liquid absorption. By applying the fullerene material with higher performance between the base film layers, it is beneficial to improve the comprehensive properties of the composite separator, such as mechanical property, heat resistance, ion and electron conductivity, and can meet the application requirements with a small amount of fullerene material, and can reduce the thickness of the modified layer in the composite separator, thus facilitating the lightweight design of the composite film. For example, by doping fullerene with a heteroatom, the heteroatom partially replace a carbon atom in the fullerene to form a new aromatic ring, which can improve both the ion and electron conductivity of the fullerene. **In** addition, the ion and electron conductivity of fullerene can be improved by modifying the fullerene with an organic functional group. The modification not only can improve the migration efficiency of ions in the composite separator, weaken the polarization phenomenon, and reduce the internal resistance of the composite separator, but also reduces the risk of lithium dendrites piercing the separator, when contacting the piercing lithium dendrites, since the fullerene also has conductive property, the electrons brought by the lithium dendrites from the electrode plate will be transported and conducted through the surface of the modified layer, thereby changing the growth direction of the lithium dendrites, allowing lithium ions to be deposited along the fullerene surface. For example, after fullerene is compounded with an inorganic material, the high flame retardancy and strong mechanical property of the inorganic material are introduced on the basis of the fullerene properties, which is beneficial to improve the properties, such as heat resistance, mechanical strength, and safety performance of the modified layer. For example, by subjecting fullerene to pore-making treatment, the specific surface area of fullerene is increased, its mesopore volume is increased, the contact area between the modified layer and the electrolyte is increased, and the amount of electrolyte retained in the modified layer is increased, thereby improving the liquid absorption and liquid retention wettability property of the composite separator. In addition, the high specific surface area and porosity of fullerene can enhance the charge transfer rate of the modified layer and reduce the internal resistance of the battery.

In some possible implementations, the heteroatom includes non-metallic elements of the main groups IIIA-VIA. By doping fullerene with a non-metallic heteroatom of the main groups IIIA-VIA, the heteroatom partially replaces a carbon atom in the fullerene to form a new aromatic ring such as pyrrole, pyridine, and thiophene, which can also improve the electron conductivity of the fullerene. The increase of the electron conductivity results in that when the modified layer contacts piercing lithium dendrites, since fullerene also have conductive property, the electrons brought by the lithium dendrites from the electrode plate will be transported and conducted through the surface of the modified layer, thereby changing the growth direction of the lithium dendrites, allowing lithium ions to be deposited along the fullerene surface, reducing the risk of lithium dendrites piercing the separator.

In some possible implementations, the heteroatom includes at least one of N, S, O, B, and P; these heteroatoms are doped into fullerene, and partially replace carbon atoms in fullerene to form new aromatic rings such as pyrrole, pyridine, and thiophene. The heteroatoms all can improve the ion and electron conductivity of fullerene, improve the migration efficiency of ions in the composite separator, and weaken the polarization phenomenon; at the same time, they can change the growth direction of lithium dendrites and improve the safety performance of the composite separator.

In some possible implementations, the organic functional group includes at least one of a pyrrole group, a thiophene group, and an aniline group; with these electron-rich organic functional groups the fullerene are modified by a chemically bonded grafting method, such that the composite separator can form ion pairs in the electrolyte, and these ion pairs can conduct electricity in the electrolyte solution, thereby increasing the conductivity of the electrolyte solution and thus improving the ionic conductivity. At the same time, the ion pairs can also be stabilized, such that the charge distribution of ions is more stable, further improving the ionic conductivity. Thereby improving the migration efficiency of ions in the composite separator, weakening the polarization phenomenon, and reducing the internal resistance of the composite separator.

In some possible implementations, the inorganic material includes metal oxides and the metal oxides have properties such as high flame retardancy and strong mechanical mechanics. Fullerene is physically compounded with the metal oxide inorganic material to form a composite material in close contact. Based on the properties of fullerene, it is beneficial to improve the characteristics, such as heat resistance, mechanical strength, and safety performance of the modified layer.

In some possible implementations, the inorganic material includes at least one of MoO₂, MgO, and Al₂O₃. In such a case, molybdenum dioxide is a transition metal oxide with a high electrical conductivity, an efficient charge transfer property, a high melting point, and high chemical stability. It is a metal oxide with a high electrical conductivity and a high carrier conduction rate. The tunnel-like gaps in its crystal structure are also conducive to the rapid intercalation/deintercalation of charged particles. Therefore, the compounding MoO₂ and fullerene can significantly improve the electrical conductivity and chemical stability of fullerene. Magnesium oxide has high fire-resistant and insulating properties and can be transformed into crystals after being burned at a high temperature of 1000°C or more. When the temperature is increased to 1500-2000°C, it becomes dead-burned magnesium oxide (magnesia) or sintered magnesium oxide. Al₂O₃ is a compound with a high hardness and a high melting point. Therefore, compounding fullerene with magnesium oxide or aluminum oxide can improve the heat resistance of the modified layer, thereby improving the thermal stability of the composite separator.

In some possible implementations, the pore-making treatment is performed by using at least one process including pore-making with a pore-making agent, chemical etching, and a template method. In such a case, by subjecting fullerene to pore-making treatment using at least one of pore-making agent, chemical etching, and template method, the specific surface area of fullerene is increased, and its mesopore volume is increased, thereby increasing the contact area between the modified layer and the electrolyte, increasing the amount of electrolyte retained in the modified layer, and improving the wettability of the composite separator. In addition, increase of the specific surface area and porosity of fullerene can enhance the charge transfer rate of the modified layer and reduce the internal resistance of the battery.

In some possible implementations, the thickness of the modified layer is no more than 5µm. The raw material components of the modified layer in the embodiment of the present application comprise a fullerene material, and the modified layer is arranged between two adjacent base film layers, as an intermediate functional layer. On the one hand, fullerene has properties, such as excellent ion and electron conductivity, porosity, liquid absorption capacity, air permeability, adhesion performance. Therefore, a small amount of high-performance fullerene material applied to the composite separator can effectively improve the properties, such as mechanical property, heat resistance, wettability property, and ion migration efficiency of the composite separator, and can reduce the application thickness of the modified layer in the composite separator. On the other hand, the modified layer is arranged between two adjacent base film layers. The base film layers on both sides can support and protect the stability of the intermediate modified layer, reduce the percentage of other components such as binder in the modified layer, and further reduce the application thickness of the modified layer. Therefore, the thickness of the modified layer in the composite separator of the embodiment of the present application may be no more than 5µm, which is beneficial for achieving lightweighting of the composite separator while improving the comprehensive performance of the composite separator, thereby increasing the energy density of the battery. For example, the thickness of the modified layer may be no more than 5µm, no more than 4µm, no more than 3µm, no more than 2µm, no more than 1µm, and the like.

In some possible implementations, the thickness of the modified layer is no more than 3µm. Under this thickness condition, it is more conducive to the lightweighting application of the composite separator.

In some possible implementations, the thickness of the modified layer is 0.5µm-2µm. In such a case, the modified layer is designed to have a fullerene modified layer as an intermediate layer in the raw material components such that the thickness of the modified layer is 0.5µm-2µm, which can effectively improve the mechanical property, heat resistance, wettability property, etc., of the composite separator. For example, the thickness of the composite separator may be 0.5µm-1µm, 1µm-1.5µm, 1.5µm-2µm, etc.

In some possible implementations, the thickness of the base film layer is 3µm-7µm. In such a case, after being laminated with the modified layer, the composite separator has characteristics, such as excellent mechanical property, air permeability, heat resistance, and liquid absorbency, and also the overall thickness of the composite separator is reduced, achieving a lightweight design of the separator. For example, the thickness of the base film layer may be 3µm-4µm, 4µm-5µm, 5µm-6µm, 6µm-7µm, etc.

In some possible implementations, the average particle size of the fullerene material is 0.1µm-5µm; in such a case, the fullerene with this average particle size is more conducive to the formation of a thin modified layer with a uniform film layer, improving the uniformity of the distribution of fullerene particles in the film layer, and facilitating the design of the size of the composite separator. Reducing the risk of poor dispersion due to too small particles and easy puncture of the base film layer of the composite separator due to too large particles, and improving the safety performance of the composite separator in the battery application. For example, the average particle size of the fullerene material can be 0.1µm-0.5µm, 0.5µm-1µm, 1µm-1.5µm, 1.5µm-2µm, 2µm-2.5µm, 2.5µm-3µm, 3µm-3.5µm, 3.5µm-4µm, 4µm-4.5µm, 4.5µm-5µm, etc.

In some possible implementations, the specific surface area of the fullerene material is^{100m2}/g-^{500m2}/g; with such a specific surface area, the fullerene material has a better contact area with the electrolyte, which is beneficial to improve the wettability of the modified layer to the electrolyte, enhance the ion migration efficiency and charge conduction rate of the modified layer, change the growth direction of lithium dendrites, and prevent lithium dendrites from piercing the composite separator. For example, the specific surface area of the fullerene material can be 100m²/g-150m²/g, 150m²/g-200m²/g, 200m²/g-250m²/g, 250m²/g-300m²/g, 300m²/g-350m²/g, 350m²/g-400m²/g, 400m²/g-450m²/g, 450m²/g-500m²/g, etc.

In some possible implementations, the total pore volume of the fullerene material is 0.01cm³/g-0.5cm³/g. In some possible implementations, the average pore size of the fullerene material is 2nm-20nm. Under the condition of this total pore volume and average mesopore size, the fullerene material has better liquid absorption and liquid retention properties for the electrode liquid, improves the wettability of the modified layer, is more conducive to the migration and transmission of ions in the separator, and weakens the polarization phenomenon. For example, the total pore volume of the fullerene material may be 0.01cm³/g-0.05cm³/g, 0.05cm³/g-0.1cm³/g, 0.1cm³/g-0.2cm³/g, 0.2cm³/g-0.3cm³/g, 0.3cm³/g-0.4cm³/g, 0.4cm³/g-0.5cm³/g, and the like. For example, the average mesopore size of the fullerene material may be 2 nm-5 nm, 5 nm-8 nm, 8 nm-10 nm, 10 nm-13 nm, 13 nm-15 nm, 15 nm-18 nm, 18 nm-20 nm, etc.

In some possible implementations, in the fullerene material, the fullerene includes at least one of C₂₀, C₆₀, C₇₀, C₇₆, and C₈₀. The fullerene used in the embodiment of the present application is not limited to C₆₀, and may also be a combination of carbon atoms of different new molecular structures. In such a case, C₂₀ is the smallest buckyball cluster (an unsaturated derivative of eicosane). The molecular structure of C₆₀ is a spherical 32-hedron. It is a football-shaped hollow symmetrical molecule with 30 carbon-carbon double bonds, which is composed of 60 carbon atoms connected by 20 six-membered rings and 12 five-membered rings. Therefore, fullerene is also referred to as footballene. C₆₀ is of a highly symmetrical cage-like structure with highly delocalized large π conjugation, which makes it highly stable. C₇₀ is of an elongated cage-like structure. The _{C76} molecule is close to the _{C60} molecule. It is formed on the basis of the _{C60} molecule and has a hollow cage structure with 16 more carbon atoms. Therefore, it is also one of the most basic and important fullerene molecules. These fullerenes have special optical, electrical and chemical properties due to their unique zero-dimensional structure.

In some possible implementations, the shape of the fullerene material includes at least one of spherical, ellipsoidal, cylindrical, and tubular shapes. The shapes of the fullerene and fullerene materials in the embodiments of the present application are not limited to conventional spheres, but may also be of ellipsoidal, cylindrical, tubular, or other configurations. In such a case, the smallest spherical type is C₂₀ (an unsaturated derivative of eicosane) and the most common is C₆₀. The ellipsoidal types include C₇₀, C₇₆, etc. Tubular materials include carbon nanotubes, which are very small hollow tubes that can be single-walled or multi-walled. Column types include giant carbon tubes, which are larger than nanotubes and can be made with walls of varying thicknesses, making them potentially useful for transporting molecules of varying sizes.

**In** some possible implementations, the modified layer also comprises a binder; by using the binder in combination with the fullerene material, the bonding stability of the fullerene material on the base film layer can be significantly improved, thereby improving the bonding stability of the fullerene film layer in the middle of the base film layer, avoiding the modified layer of the composite separator from cracking, powder shedding, etc., during the battery charging and discharging process, and improving the operating stability of the composite separator.

**In** some possible implementations, the mass percentage of the modified layer in the composite separator is 10%-20%. Under this mass percentage condition, the modified layer can effectively improve the properties, such as mechanical property, heat resistance, wettability, and stability of the composite separator, and is also conducive to the lightweight design of the composite separator. **In** some specific embodiments, the mass percentage of the modified layer in the composite separator can be 10%-12%, 12%-14%, 14%-15%, 15%-17%, 17%-19%, 19%-20%, etc.

**In** some possible implementations, the porosity of the base film layer is 30%-70%; the porosity is the volume percentage of pores in the volume of the monomer base film layer, which is related to the density of the raw resin and the film, and reflects the number of micropores inside the separator. Under this porosity condition, the base film layer has good air permeability, which is beneficial to the migration and transmission of ions in the separator and reduces the impedance of the battery. For example, the porosity of the base film layer may be 30%-40%, 40%-50%, 50%-60%, 60%-70%, 40%-60%, 50%-70%, etc.

In some possible implementations, the average pore size of the base film layer is 100 nm-800 nm and the size of the pore size is related to the air permeability of the separator. In order to prevent direct contact of electrode particles, it is necessary to prevent electrode particles from directly passing through the separator and ensure low resistance and high ion and electron conductivity. A pore size that is too large may cause perforation of the separator, resulting in a micro-short circuit in the battery and an increase in the self-discharge rate; a pore size that is too small will increase the resistance; an uneven distribution of pore sizes will lead to inconsistent current density inside the battery, which will form local dendrites over a long period of time and pierce the separator. Under this average pore size condition, the submicron pore size of the separator is sufficient to prevent the direct passage of electrode particles, such that the base film layer has a suitable pore size, which is beneficial to ion migration and transmission, and to prevent direct contact of electrode particles, preventing electrode particles from directly passing through the separator. It not only avoids the separator perforation caused by too large pore size, resulting in a micro short circuit in the battery, but also avoids the increase in resistance caused by too small pore size. This results in the separator having lower electrical resistance and higher ion and electron conductivity. For example, the average pore size of the base film layer can be 100nm-200nm, 200nm-300nm, 300nm-400nm, 400nm-500nm, 500nm-600nm, 600nm-700nm, 700nm-800nm, 200nm-700nm, 300nm-600nm, 400nm-700nm, 500nm-800nm, etc.

In some possible implementations, the surface density of the base film layer is 2g/m²-10g/m²; the surface density refers to the weight per unit area of the separator. Since the separator contains a large number of micropores, as the number of micropores decreases and the surface density of the separator increases, the porosity and air permeability will decrease. Under this surface density condition, the porosity of the base film layer is ensured, which is beneficial to improving the air permeability of the base film layer, facilitating the migration and transmission of ions in the separator, avoiding short circuits, and facilitating the lightweight design of the composite separator. For example, the surface density of the base film layer can be 2g/m²-3g/m², 3g/m²-4g/m², 4g/m²-5g/m², 5g/m²-6g/m², 6g/m²-7g/m², 7g/m²-8g/m², 8g/m²-9g/m², 9g/m²-10g/m², 3g/m²-9g/m², 4g/m²-8g/m², 5g/m²-7g/m², 6g/m²-8g/m², 7g/m²-9g/m², 8g/m²-10g/m²etc.

In some possible implementations, the base film layer comprises at least one material of polypropylene, polyethylene, glass fibers and polyvinylidene fluoride. The materials of these base film layers have good electrical insulation property and maintain chemical stability over a wide range of temperature and voltage. It is also conducive to making a base film layer with a small thickness, high uniformity, appropriate porosity and pore size, which can quickly be wetted by the electrolyte, isolate electrons while maintaining the free flow of ions, so as to meet the requirements of high energy, high power and cycling performance of the battery. At the same time, it also has certain mechanical strength and processing strength to meet the needs of battery during assembly and use.

In some possible implementations, the thickness of the composite separator is not higher than 15µm. By applying a modified layer in the composite separator and arranging the modified layer in two adjacent base film layers, the characteristics, such as mechanical property, air permeability, heat resistance, and wettability property of the composite separator can be improved, and the thickness of the composite separator can be reduced to no more than 15µm, thereby achieving lightweight separator. In addition, the small thickness of the separator shortens the channel for ion migration, improves ion migration efficiency, and weakens polarization.

In some possible implementations, the thickness of the composite separator is 7µm-15µm. At this thickness, the composite separator has better comprehensive properties such as mechanical property, air permeability, wettability, and heat resistance. For example, the thickness of the composite separator may be 7µm-8µm, 8µm-9µm, 9µm-10µm, 10µm-11µm, 11µm-12µm, 12µm-13µm, 13µm-14µm, 14µm-15µm, 8µm-14µm, 9µm-13µm, 10µm-12µm, etc.

In some possible implementations, the air permeability of the composite separator is 300 s/(100 cc)-500 s/(100 cc). The embodiment of the present application includes a composite separator comprising a plurality of laminated base film layers and at least one modified layer disposed between two adjacent base film layers, and has high air permeability. Air permeability is an indicator of the gas permeability of the separator and can indirectly reflect the permeability of ions. The air permeability of the composite separator of 300s/(100cc)-500s/(100cc) fully ensures the efficient migration and transmission efficiency of ions in the separator, and prevents other substances such as electrons from penetrating the composite separator and affecting the stability of the battery system. At the same time, it ensures that the composite separator has good wettability to the electrolyte. Good wettability is conducive to improving the affinity between the separator and the electrolyte, expanding the contact area between the separator and the electrolyte, thereby increasing ion conductivity and improving the charge and discharge performance and capacity of the battery. In some specific embodiments, the air permeability of the composite separator can be 300s/(100cc)-350ss/(100cc), 350s/(100cc)-400s/(100cc), 400s/(100cc)-450s/(100cc), 450s/(100cc)-500s/(100cc), etc.

In some possible implementations, the composite separator has a transverse tensile strength of not less than 1000 kg/cm², and a longitudinal tensile strength of not less than 1200 kg/cm². Tensile strength refers to the ratio of the maximum force that the separator can withstand before breaking under the action of pure tensile force to the cross-sectional area of the tested separator. The higher the tensile strength, the lower the probability of damage and breakage of the composite separator under the action of external force. The sufficient transverse and longitudinal tensile strength of the composite separator in the embodiment of the present application can prevent the separator from deforming and improve the operating stability of the separator.

In some possible implementations, the composite separator has a transverse tensile strength of not less than 1000 kg/cm², and not more than 1700kg/cm² and a longitudinal tensile strength of not less than 1200 kg/cm² and not more than 1500kg/cm². Under the conditions of the transverse and longitudinal tensile strength, the deformation requirements of the composite separator are met and the appropriate shrinkage rate of the composite separator is ensured. For example, the transverse tensile strength of the composite separator may be 1100kg/cm²-1200kg/cm², 1200kg/cm²-1300kg/cm², 1300kg/cm²-1400kg/cm², 1400kg/cm²-1500kg/cm², 1500kg/cm²-1600kg/cm², 1600kg/cm²-1700kg/cm²etc., and the longitudinal tensile strength may be 1250kg/cm²-1300kg/cm², 1300kg/cm²-1350kg/cm², 1350kg/cm²-1400kg/cm², 1400kg/cm²-1500kg/cm².

The composite separator of the above embodiment of the present application can be prepared by the following embodiment method.

In a second aspect, as shown in FIG. 1, an embodiment of the present application provides a method for preparing a composite separator, including the following steps:
S10. preparing a fullerene slurry.
S20. obtaining at least two base film layers, and preparing the fullerene slurry as a modified layer between two adjacent base film layers to obtain the composite separator.

**In** the preparation method of a composite separator provided in an embodiment of the present application, the prepared fullerene slurry is made into a modified layer between the two base film layers, thereby obtaining a composite separator with laminated base film layer-modified layer-base film layer, wherein "-" indicates the connection relationship in a laminated manner between the film layers. The composite separator has a simple preparation process and is easy to operate, and is suitable for industrial large-scale production and application. The prepared composite separator introduces a modified layer with properties, such as excellent mechanical rigidity, good ion and electron conductivity, thermal conductivity, strong stability, and wettability in the middle of the base film layer, thereby improving the comprehensive properties of the composite separator, such as mechanical property, heat resistance, ion and electron conductivity, and a liquid absorbency. Furthermore, based on the structural design of the fullerene-modified layer as an intermediate layer, the composite separator can be designed to be lightweighting.

The composite separator prepared in the embodiment of the present application comprises a plurality of base film layers, forming a laminated composite structure from the plurality of base film layers and at least one modified layer. For example, the structure of the composite separator can be base film layer-modified layer-base film layer-base film layer, base film layer-base film layer-modified layer-base film layer-base film layer, etc. **In** addition, when there are a plurality of base film layers, modified layers can be prepared respectively between different adjacent base film layers, such that the prepared composite separator forms a laminated composite structure consisting of a plurality of base film layers and a plurality of modified layers. For example, the structure of the composite separator can be base film layer-modified layer-base film layer-modified layer-base film layer. The structure and number of layers of the composite separator can be flexibly designed according to actual application needs to meet the requirements of different battery systems for separator performance. In some specific embodiments, the composite separator is a composite structure of two base film layers and an intermediate modified layer, and the specific structure is base film layer-modified layer-base film layer.

In the above step S 10, a fullerene slurry is prepared. Fullerene has properties, such as high ion and electron conductivity, porosity, liquid absorption capacity, wettability, air permeability, and adhesion performance, such that it can meet the requirements of the separator for properties such as air permeability, and liquid absorption. By applying the slurry prepared using the modified fullerene material with higher performance in the modified layer between the base film layers, it is beneficial to improve the comprehensive properties of the composite separator, such as mechanical property, heat resistance, ion and electron conductivity, and can meet the application requirements with a small amount of fullerene material, and can reduce the thickness of the modified layer in the composite separator, thus facilitating the lightweight design of the composite film.

In some possible implementations, the step of preparing the fullerene slurry comprises: after modifying the fullerene, mixing the fullerene material with a binder, a dispersant and a solvent to form a mixed slurry to obtain the fullerene slurry. In such a case, the binder can significantly improve the bonding stability of the fullerene material on the base film layer, improve the bonding stability of the fullerene film layer in the middle of the base film layer, avoid the cracking and powder shedding of the modified layer of the composite separator during the battery charging and discharging process, and improve the operating stability of the composite separator. The dispersant is used to improve the dispersion stability of the fullerene material in the slurry, prevent the fullerene in the slurry from agglomerating and settling, and facilitate the subsequent slurry to form a modified layer with a smooth film layer and high uniformity.

In some possible implementations, the binder includes: at least one of carboxymethyl cellulose, styrene butadiene rubber, polyacrylonitrile, polyvinyl alcohol, polytetrafluoroethylene, polyvinylidene fluoride, and polyimide; these binders can improve the bonding stability of the fullerene material on the base film layer, thereby improving the bonding stability of the fullerene film layer in the middle of the base film layer, avoiding the composite separator from cracking, powder shedding, etc. in the modified layer during the battery charging and discharging process, and improving the operating stability of the composite separator.

In some possible implementations, the dispersant includes: at least one of polyacrylate, polyacrylamide, and long chain fatty acid; the dispersants all can be used to improve the dispersion stability of the fullerene material in the slurry, prevent the fullerene in the slurry from agglomerating and settling, and facilitate the subsequent slurry to form a modified layer with a smooth film layer and high uniformity.

In some possible implementations, the solvent includes: at least one of deionized water, N-methyl pyrrolidone, ethanol, dimethylformamide, dimethylacetamide, acetone, and dichloromethane. These solvents have a good dissolving or dispersing effect on fullerene materials, binders, and dispersants, which is beneficial for preparing a fullerene slurry with good dispersion and stability, and is beneficial for the subsequent preparation of a modified layer with a uniform and smooth film layer from the fullerene slurry.

In some possible implementations, in the fullerene slurry, the mass ratio of the fullerene material, the binder and the dispersant is (60-90): (5-20): (1-20). In some possible implementations, in the fullerene slurry, the ratio of the total mass of the fullerene material, the binder and the dispersant to the mass of the solvent is (0.1-0.6):1. At this ratio, the amounts of the solvent and dispersant in the slurry fully ensures the dispersion stability and viscosity of the fullerene slurry, which is beneficial to the subsequent film-forming treatment; and the amount of binder in the slurry fully ensures the bonding stability of the fullerene material with the base film layer during the film-forming process, thereby ensuring the stability of the modified layer. For example, the ratio of the total mass of the fullerene material, the binder, and the dispersant to the mass of the solvent can be (0.1-0.2):1, (0.2-0.3):1, (0.3-0.4):1, (0.4-0.5):1, (0.5-0.6):1, etc.

In some possible implementations, the process for modifying the fullerene comprises at least one of: doping with a heteroatom, modification with an organic functional group, compounding an inorganic material, and pore-making treatment. In such a case, by doping a heteroatom in fullerene or by modification with an organic functional group on fullerene, both the ion and electron conductivity of fullerene can be improved. The modification thus not only improves the migration efficiency of ions in the composite separator, weakens the polarization phenomenon, and reduces the internal resistance of the composite separator, and also reduces the risk of lithium dendrites piercing the separator, when contacting the piercing lithium dendrites, since fullerene also has conductive property, the electrons brought by the lithium dendrites from the electrode plate will be transported and conducted through the surface of the modified layer, thereby changing the growth direction of the lithium dendrites, allowing lithium ions to be deposited along the fullerene surface. By compounding an inorganic material, the high flame retardancy and strong mechanical property of the inorganic material are introduced on the basis of the fullerene properties, which is beneficial to improve the properties, such as heat resistance, mechanical strength, and safety performance of the modified layer. By subjecting fullerene to pore-making treatment, the specific surface area of fullerene is increased, its mesopore volume is increased, the contact area between the modified layer and the electrolyte is increased, and the amount of electrolyte retained in the modified layer is increased, thereby improving the liquid absorption and liquid retention wettability property of the composite separator.

The present application does not specifically limit the specific modification treatment method, and any method that can achieve the corresponding modification effect can be used to modify the fullerene. For example, the methods for doping fullerene with a heteroatom include, but are not limited to: activating the fullerene with potassium hydroxide or the like in a protective atmosphere, and then introducing a heteroatom source substance and performing high-temperature heat treatment to dope the heteroatoms into the fullerene. For example, the methods for modifying fullerene with organic functional groups include, but are not limited to: activating the surface of the fullerene, then introducing an organic substance containing the target organic functional groups, and grafting the organic active functional groups onto the surface of the fullerene by chemical reactions. For example, the methods for treating fullerene by compounding an inorganic substance include but are not limited to: treating fullerene by compounding with an inorganic material by ultrasound, co-precipitation, self-assembly, etc., such that the fullerene and inorganic material are fully and highly mixed to form a close physical contact interface, similar to a heterojunction structure, which is more conducive to the composite material exerting the properties of these two.

In some possible implementations, the pore-making treatment is performed by using at least one of pore-making with a pore-making agent, chemical etching, and a template method, and any other method that can further increase the fullerene porosity and specific surface area may also be used. In such a case, the method for making pores in fullerene by using a pore-making agent includes but is not limited to, after mixing the fullerene with the pore-making agent, under certain pore making conditions, allowing the pore-making agent to generate gaseous substances to form pores in the fullerene, thereby increasing its surface area and porosity. The chemical etching method includes, but is not limited to, destroying some carbon-hydrogen bonds in fullerene using a strong oxidizing chemical, increasing the defects in fullerene, and improving the specific surface area and porosity. The method for pore-making treatment by a template method is to use a template agent as a template for the pore-forming structure to further increase the pore structure in the fullerene material, thereby increasing its specific surface area and porosity.

In some possible implementations, the heteroatom includes at least one of N, S, O, B, and P. The doping of these heteroatoms all can improve the ion and electron conductivity of fullerene, improve the migration efficiency of ions in the composite separator, and weaken the polarization phenomenon; at the same time, they can change the growth direction of lithium dendrites and improve the safety performance of the composite separator.

In some possible implementations, the organic functional group includes at least one of a pyrrole group, a thiophene group, and an aniline group; these electron-rich organic functional groups are used for modification, such that the composite separator can form ion pairs in the electrolyte, and these ion pairs can conduct electricity in the electrolyte solution, thereby increasing the conductivity of the electrolyte solution and thus improving the ionic conductivity, thereby improving the migration efficiency of ions in the composite separator, weakening the polarization phenomenon, and reducing the internal resistance of the composite separator.

In some possible implementations, the inorganic material includes at least one of MoO₂, MgO, and Al₂O₃; and compounding MoO₂ and fullerene can significantly improve the electrical conductivity and chemical stability of the fullerene. Compounding fullerene with magnesium oxide or aluminum oxide can improve the heat resistance of the modified layer, thereby improving the thermal stability of the composite separator.

In some possible implementations, the average particle size of the fullerene material in the modified layer is 0. 1µm-5µm; the fullerene with this average particle size is more conducive to the formation of a thin modified layer with a uniform film layer, improving the uniformity of the distribution of fullerene particles in the film layer, and facilitating the design of the size of the composite separator.

In some possible implementations, the fullerene includes at least one of C₂₀, C₆₀, C₇₀, C₇₆, and C₈₀; these fullerenes have special optical property, electrical conductivity, and chemical property due to their unique zero-dimensional structures.

In some possible implementations, the shape of the fullerene material in the modified layer includes at least one of spherical, ellipsoidal, cylindrical, and tubular shapes.

In the above step S20. obtaining two base film layers, and preparing the fullerene slurry as a modified layer between the adjacent base film layers to obtain the composite separator. The modified layer is prepared between adjacent base film layers. The base film layers on both sides not only can provide a substrate for the modified layer, but also can have the supporting and protective functions, which is beneficial to maintaining the stability of the modified layer and avoiding the powder shedding of the modified layer during the charging and discharging process, which affects the stability of the electrochemical performance of the battery. At the same time, it can also reduce the amount of the materials, such as bonding materials and the like in the modified layer, avoid introducing too much other materials to affect the air permeability and ion migration efficiency of the composite separator, and facilitates to further reduce the thickness of the modified layer, reduce the overall thickness of the composite separator, and achieve lightweighting.

In some possible implementations, the preparation of the modified layer comprises the steps of: coating the fullerene slurry on one side surface of one base film layer, laminating the other base film layer to the surface coated with the slurry, drying and curing to form the modified layer between the two base film layers, to obtain the composite separator. In some specific embodiments, the two base film layers can be respectively arranged on unwinding rollers, and the fullerene slurry can be coated on the surface of one base film layer. After the base film layer on the other unwinding roller is laminated to the coating surface of the slurry, followed by drying and pressing treatment to form the modified layer between the two base film layers to obtain the composite separator.

In some possible implementations, the thickness of the modified layer is 0.5µm-2µm; this thickness can effectively improve the comprehensive properties of the composite separator, such as mechanical property, heat resistance, and wettability property, and is conducive to the lightweight design of the composite separator.

In some possible implementations, the mass percentage of the modified layer in the composite separator is 10%-20%. Under this mass percentage condition, the modified layer can effectively improve the properties, such as mechanical property, heat resistance, wettability, and stability of the composite separator, and is also conducive to the lightweight design of the composite separator.

In some possible implementations, the thickness of the base film layer is 3µm-7µm; the base film layer of this thickness fully ensures the characteristics, such as mechanical property, air permeability, heat resistance, and liquid absorbency of the separator, and is conducive to the reduction of the overall thickness of the composite separator, thereby realizing a lightweight design of the composite separator.

In some possible implementations, the thickness of the composite separator is not higher than 15µm. By applying a modified layer in the composite separator and arranging the modified layer in two adjacent base film layers, the characteristics, such as mechanical property, air permeability, heat resistance, and wettability property of the composite separator can be improved, and the thickness of the composite separator can be reduced to no more than 15µm, thereby achieving lightweight separator.

In some possible implementations, the porosity of the base film layer is 30%-70%; under this porosity condition, the base film layer has good air permeability, which is beneficial to the migration and transmission of ions in the separator and reduces the impedance of the battery.

In some possible implementations, the average pore size of the base film layer is 100nm-800nm; under this average pore size condition, the submicron pore size of the separator is sufficient to prevent the direct passage of electrode particles, such that the base film layer has a suitable pore size, which is beneficial to ion migration and transmission, and to prevent direct contact of electrode particles, preventing electrode particles from directly passing through the separator. It not only avoids the separator perforation caused by too large pore size, resulting in a micro short circuit in the battery, but also avoids the increase in resistance caused by too small pore size.

In some possible implementations, the surface density of the base film layer is 2g/m²-10g/m²; under this surface density condition, the porosity of the base film layer is ensured, which is beneficial to improving the air permeability of the base film layer, facilitating the migration and transmission of ions in the separator, avoiding short circuits, and facilitating the lightweight design of the composite separator.

In some possible implementations, the base film layer comprises at least one material of polypropylene, polyethylene, glass fibers and polyvinylidene fluoride. The materials of these base film layers have good electrical insulation property and maintain chemical stability over a wide range of temperature and voltage. It is conducive to making a base film layer with a small thickness, high uniformity, appropriate porosity and pore size, which can quickly be wetted by the electrolyte, isolate electrons while maintaining the free flow of ions, so as to meet the requirements of high energy, high power and cycling performance of the battery. At the same time, it also has certain mechanical strength and processing strength to meet the needs of battery during assembly and use.

In some possible implementations, the air permeability of the composite separator is 300s/(100cc)-500s/(100cc), which fully ensures the efficient migration and transmission efficiency of ions in the separator, and prevents other substances such as electrons from penetrating the composite separator and affecting the stability of the battery system. At the same time, it ensures that the composite separator has good wettability to the electrolyte. Good wettability is conducive to improving the affinity between the separator and the electrolyte, expanding the contact area between the separator and the electrolyte, thereby increasing ion conductivity and improving the charge and discharge performance and capacity of the battery.

In some possible implementations, the composite separator has a transverse tensile strength of not less than 1000 kg/cm² and a longitudinal tensile strength of not less than 1200 kg/cm²; the sufficient transverse and longitudinal tensile strength of the composite separator can prevent the separator from deforming and improve the operating stability of the separator.

In a third aspect, a battery cell is provided in an embodiment of the present application, wherein the battery cell comprises a positive electrode, a negative electrode, a separator and an electrolyte, wherein the separator comprises the composite separator described above, or the composite separator prepared by the method described above.

For the battery cell of the embodiment of the present application, as the separator, the above-mentioned composite separator which has properties, such as excellent mechanical property, heat resistance, wettability, stability, ion and electron conductivity, and can be designed to be lightweighting, can be used. Therefore, the rate performance, energy density, cycle stability and safety performance of the battery cell are improved.

In the present application, the positive electrode, negative electrode, electrolyte, etc., in the battery cell of the embodiment are specifically limited, and can be applied to any battery system.

In some possible implementations, the negative electrode material in the battery cell includes but is not limited to carbon materials such as graphite, soft carbon (such as coke), hard carbon, or nitrides, tin-based oxides, tin-based oxides, tin alloys, and silicon-based negative electrode materials.

In some possible implementations, the preparation of the negative electrode plate includes the following steps: mixing a negative electrode material with a conductive agent such as conductive carbon black, a binder such as carboxymethyl cellulose and styrene butadiene rubber, and a solvent such as water in a mass ratio of (80-99):(1-5):(2-10): 100 to form a positive electrode mixed slurry, followed by vacuum degassing, material discharging, coating on a coating machine, and rolling, slitting, and die-cutting to obtaining a negative electrode plate.

In some possible implementations, the positive electrode material in the battery cell includes metal oxides, such as lithium cobalt oxide, lithium nickel oxide, ternary nickel-cobalt-manganese material, lithium nickel cobalt aluminum oxide, lithium-rich manganese-based material, lithium manganate, lithium nickel manganate, ferrosoferric oxide, lithium vanadium oxide, etc., polyanionic salts such as phosphates, silicates, sulfates, borates, titanates, such as lithium iron phosphate, lithium manganese phosphate, lithium iron manganese phosphate, lithium vanadium phosphate, lithium vanadium phosphate, lithium cobalt phosphate, lithium nickel phosphate, lithium iron silicate, lithium ferrous fluorosulfate, lithium iron borate, lithium iron titanate, etc., as well as fluorides, sulfides, selenides and other types, such as iron trifluoride, cobalt trifluoride, nickel trifluoride (NiF3), titanium disulfide, iron disulfide, molybdenum disulfide, niobium triselenide, etc.

In some possible implementations, the preparation of the positive electrode plate includes the following steps: mixing a positive electrode material with a conductive agent such as conductive carbon black, a binder such as polyvinylidene fluoride, and a solvent such as N-methyl pyrrolidone in a mass ratio of (80-99):(1-5):(2-10): 100 to form a positive electrode mixed slurry, followed by vacuum degassing, material discharging, coating on a coating machine, and rolling, slitting, and die-cutting to obtain a positive electrode plate.

In some possible implementations, the electrolyte in the battery cell includes at least one soluble metal salt.

In some possible implementations, the battery cell types include lithium-ion batteries, and new batteries such as sodium-ion batteries, lithium-air batteries, and lithium metal batteries.

In some possible implementations, the embodiments of the present application have no special limitation on the shape of the battery cell, and the shape of the battery cell can be of a cylindrical, square or any other shape. For example, FIG. 6 shows a battery cell 05 in a square structure as an example.

In some embodiments, as shown in FIG. 7, the outer package of the battery cell 05 may include a case 51 and a cover plate 53. The case 51 may include a bottom plate and side plates connected to the bottom plate, which define an accommodating cavity. The case 51 has an opening in communication with the accommodating cavity, and the cover plate 53 is configured to cover the opening to close the accommodating cavity. The positive electrode plate, the negative electrode plate, and the separator may form an electrode assembly 52 by a winding process and/or a stacking process. The electrode assembly 52 is encapsulated in the accommodating cavity. The electrode assembly 52 is impregnated with the electrolyte. The number of the electrode assembly 52 included in the battery cell 05 can be one or more, and can be adjusted according to actual requirements. In such a case, the composite separator of the above embodiment is arranged between the positive electrode plate and the negative electrode plate.

In some possible implementations, the battery cells according to the present application can be assembled into a battery module, the number of battery cells included in the battery module can be more, and the specific number can be adjusted according to the application and capacity of the battery module.

In a fourth aspect, a battery module is provided in an embodiment of the present application, wherein the battery module comprises a plurality of battery cells described above.

For the battery module of the embodiments of the present application, since the battery module includes battery cells having the above-mentioned specific characteristics such as high rate performance, energy density, cycling stability and safety performance, the properties, such as rate performance, energy density, cycling stability and safety of the battery module are also improved.

In a possible embodiment, as a schematic view of an exemplary battery module 06, as shown in FIG. 8, in the battery module 06, a plurality of battery cells 05 may be arranged in sequence along the length direction of the battery module 06. Of course, they can also be arranged in any other way. Furthermore, the plurality of battery cells 05 may be fixed by fasteners.

In a possible embodiment, the battery module 06 may further include a shell having an accommodating space, and the plurality of battery cells 05 are accommodated in the accommodating space.

In a possible embodiment, the above-mentioned battery module may further be assembled into a battery pack, and the number of the battery modules included in the battery pack can be adjusted according to the application and capacity of the battery pack.

In a fifth aspect, a battery pack is provided in an embodiment of the present application, wherein the battery pack comprises a plurality of battery cells or battery modules described above.

For the battery pack of the embodiment of the present application, since the battery pack includes battery modules having the above-mentioned characteristics such as high rate performance, energy density, cycling stability and safety performance, the properties, such as rate performance, energy density, cycling stability and safety of the battery pack are also improved.

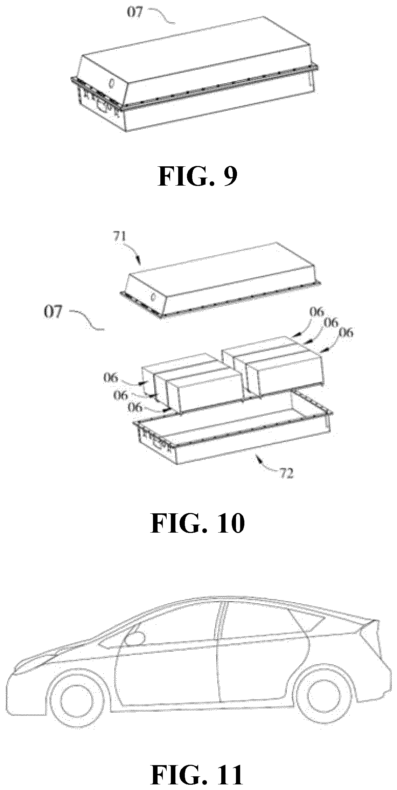

In a possible embodiment, as a schematic view of an exemplary battery pack 07, as shown in FIG. 9 and FIG. 10, in the battery pack 07, a battery box and a plurality of battery modules 06 arranged in the battery box are included. The battery box includes an upper box 71 and a lower box 72, where the upper box 71 is configured to cover the lower box 72 to form an enclosed space for accommodating the battery modules 06. The plurality of battery modules 06 can be arranged in the battery box in an arbitrary manner.

In a sixth aspect, an electrical device is provided in an embodiment of the present application, wherein the electrical device comprises a battery cell described above, or a battery module described above, or a battery pack described above.

For the electrical device of the embodiment of the present application, since the electrical device includes the above-mentioned battery cells, battery modules or battery packs with performance such as high rate performance, energy density, cycling stability and safety performance, the power safety and stability of the electrical device are improved.

In a possible embodiment, for the electrical device, the above battery cell, the battery module, or the battery pack can be selected according to the use requirements of the electrical device.

In a possible embodiment, the electrical device may be, but is not limited to, a mobile device (such as a mobile phone and a laptop), or an electric vehicle (such as an all-electric vehicle, a hybrid electric vehicle, a plug-in hybrid electric vehicle, an electric bicycle, an electric scooter, an electric golf cart, and an electric truck), or an electric train, a ship, a satellite, an energy storage system, etc.

In a possible embodiment, the electrical device may be an all-electric vehicle, a hybrid electric vehicle, a plug-in hybrid electric vehicle, etc. In order to satisfy the requirements of the electrical device for high power and high energy density of the battery, the above battery pack or battery module can be used.

In some specific embodiments, a schematic view of an electrical apparatus as an example is shown in FIG. 11. The electrical apparatus is, e.g., an all-electric vehicle, a hybrid electric vehicle, or a plug-in hybrid electric vehicle. In order to meet the requirements of the electrical apparatus for high power and high energy density, a battery pack or a battery module may be used.

In some other possible embodiments, the electrical device may be a tape recorder, a radio, an electronic learning machine, a mobile phone, a tablet, a laptop, etc. Lighting and thinning of the electrical device is generally required, and thus the battery cell in the above embodiment can be used as a power source.

### Examples

Examples of the present application will be described below. The examples described below are exemplary and only used to explain the present application, and are not to be construed as limiting the present application. Where specific techniques or conditions are not specified in the examples, the techniques or conditions described in the literature of the art or the product specifications are followed. Where manufacturers are not specified, the reagents or instruments used are conventional products and are commercially available.

### Example 1

This example of the present application provides a composite separator, comprising a polyethylene base film layer with a thickness of 5µm, an N/P co-doped fullerene material intermediate coating with a thickness of 1µm, and a polypropylene base film layer with a thickness of 6µm, which were sequentially laminated.

Its preparation comprises the following steps:
① Preparation of N/P co-doped modified C₆₀: 150 mg of C₆₀ was dissolved in 50 ml of toluene and ultrasonicated for 30 minutes. Ethylenediamine was added dropwise to the solution and ultrasonicated for 25 minutes. Then, tetrabutylammonium hydroxide and 2 ml of H₂O₂ were added dropwise into the mixed solution, and stirred at 60°C for 2 hours. The precipitate was collected by precipitation and washed three times with ethanol. On this basis, 3 ml of different volumes of phytic acid (cyclohexanehexol hexaphosphate) solution were added to the ethanol dispersion, stirred vigorously at room temperature for 12 h, and the precipitates were collected. The mixture was kept at 900°C for 2h under an N₂ atmosphere. The N/P co-doped C₆₀ with improved electron conductivity was obtained, and the average particle size was about 200 nm.
② The modified C₆₀, polyacrylate and carboxymethyl cellulose were uniformly mixed in a solvent at a mass ratio of 3:3:1 to form an aqueous slurry with a solid content of 25 wt % and a viscosity of 100 mPa·s to prepare a fullerene slurry.
③ The fullerene slurry was coated onto a 5µm polyethylene PE base film by a coating machine. The other unwinding roller was a 6µm polypropylene PP base film. The slurry was applied to one surface of the PE base film by extrusion to form a wet coating with a thickness of about 1µm. The coating was transferred to an oven and baked at 60°C for 2 minutes. The roller was then reversed to press the PP base film onto the wet coating at a pressure of 1000Mpa to obtain a composite separator.

### Example 2

This example provided a composite separator, comprising a polyethylene base film layer with a thickness of 5µm, an N/P co-doped fullerene material intermediate coating with a thickness of 1µm, and a polypropylene base film layer with a thickness of 6µm, which were sequentially laminated. The difference between this example and Example 1 was that the amount of phytic acid solution added in step ① was 5 ml.

### Example 3

This example provided a composite separator, comprising a polyethylene base film layer with a thickness of 5µm, an N/P co-doped fullerene material intermediate coating with a thickness of 1µm, and a polypropylene base film layer with a thickness of 6µm, which were sequentially laminated. The difference between this example and Example 1 was that the amount of phytic acid solution added in step ① was 8 ml.

### Example 4

This example provided a composite separator, comprising a polyethylene base film layer with a thickness of 5µm, an N/P co-doped fullerene material intermediate coating with a thickness of 1µm, and a polypropylene base film layer with a thickness of 6µm, which were sequentially laminated. The difference between this example and Example 1 was that the amount of phytic acid solution added in step ① was 10 ml.

### Example 5

This example provided a composite separator, comprising a polyethylene base film layer with a thickness of 5µm, an N/P co-doped fullerene material intermediate coating with a thickness of 0.5µm, and a polypropylene base film layer with a thickness of 6µm, which were sequentially laminated. The difference between this example and Example 1 was that the thickness of the N/P co-doped fullerene material intermediate coating was 0.5µm.

### Example 6

This example provided a composite separator, comprising a polyethylene base film layer with a thickness of 5µm, an N/P co-doped fullerene material intermediate coating with a thickness of 2µm, and a polypropylene base film layer with a thickness of 6µm, which were sequentially laminated. The difference between this example and Example 1 was that the thickness of the N/P co-doped fullerene material intermediate coating was 2µm.

### Example 7

This example of the present application provides a composite separator, comprising a polyethylene base film layer with a thickness of 5µm, a composite α-alumina and N/P co-doped fullerene material intermediate coating with a thickness of 1µm, and a polypropylene base film layer with a thickness of 6µm, which were sequentially laminated.

Its preparation comprises the following steps:
① Preparation of composite α-alumina and N/P co-doped modified C₆₀: N/P doped modified C60 prepared in Example 1, α-alumina, polyacrylate, carboxymethyl cellulose were uniformly mixed in deionized water at a mass ratio of 4:2:1:0.5 to form an aqueous slurry with a solid content of 25 wt % and a viscosity of 100 mPa·s to prepare a fullerene slurry.
② The fullerene slurry was coated onto a 5µm polyethylene PE base film by a coating machine. The other unwinding roller was a 5µm polypropylene PP base film. The slurry was applied to one surface of the PE base film by extrusion to form a wet coating with a thickness of about 1µm. The coating was transferred to an oven and baked at 60°C for 2 minutes. The roller was then reversed to press the PP base film onto the wet coating at a pressure of 1000Mpa to obtain a composite separator.

### Example 8

This example of the present application provides a composite separator, comprising a polyethylene base film layer with a thickness of 5µm, a pore-formed fullerene material intermediate coating with a thickness of 1µm, and a polypropylene base film layer with a thickness of 6µm, which were sequentially laminated.

Its preparation comprises the following steps:
① Preparation of pore-formed modified C₆₀: 0.3 mmol C₆₀ fullerene and dimethoxymethane were mixed at a molar ratio of 10:1, and the mixture was added to 120 ml anhydrous nitrobenzene and 3.36 mmol aluminum chloride, and placed in an oven at 150°C for 12 h. After cooling, the solid was collected by centrifugation, washed with deionized water and dried under vacuum at 120°C. The dried solid was dissolved in a minimum of 6 ml CH₂Cl₂ and the large number of insoluble particles was filtered off. The clear CH₂Cl₂ solution was added dropwise into a 1:1 mixture of ether and hexane with vigorous stirring to precipitate the monoadduct, and the precipitate was collected as a porous aromatic mixture composed of fullerene material molecules. By the monoaddition organic coupling reaction of fullerene and dimethoxy compound, a C₆₀ fullerene-based porous aromatic framework was formed, which has chemical and thermal stability and also a high specific surface area.
② The modified C₆₀, polyacrylate and carboxymethyl cellulose were uniformly mixed in a solvent at a mass ratio of 3:3:1 to form an aqueous slurry with a solid content of 25 wt % and a viscosity of 100 mPa·s to prepare a fullerene slurry.
③ The fullerene slurry was coated onto a 5µm polyethylene PE base film by a coating machine. The other unwinding roller was a 5µm polypropylene PP base film. The slurry was applied to one surface of the PE base film by extrusion to form a wet coating with a thickness of about 1µm. The coating was transferred to an oven and baked at 60°C for 2 minutes. The roller was then reversed to press the PP base film onto the wet coating at a pressure of 1000Mpa to obtain a composite separator.

### Example 9

This example of the present application provides a composite separator, comprising a polyethylene base film layer with a thickness of 5µm, a nitro-modified fullerene material intermediate coating with a thickness of 1µm, and a polypropylene base film layer with a thickness of 6µm, which were sequentially laminated.

Its preparation comprises the following steps:
① Preparation of nitro-modified C₆₀: 0.6 g of C₆₀ was added to 500 ml of chlorobenzene and stirred at 600 rpm/min for 1 h at room temperature. A gas from the reaction of Cu and concentrated nitric acid was continuously introduced into the solution under stirring. After reaction for 3 h, the solvent was evaporated continuously to obtain the nitrofullerene material. The highly polar nitro-modified C₆₀ has the function of improving the compatibility between the composite separator and the electrolyte components, thereby increasing the lyophilicity of the separator.
② The nitro-modified C₆₀, polyacrylate and carboxymethyl cellulose were uniformly mixed in a solvent at a mass ratio of 3:3:1 to form an aqueous slurry with a solid content of 25 wt % and a viscosity of 100 mPa·s to prepare a fullerene slurry.
③ The fullerene slurry was coated onto a 5µm polyethylene PE base film by a coating machine. The other unwinding roller was a 5µm polypropylene PP base film. The slurry was applied to one surface of the PE base film by extrusion to form a wet coating with a thickness of about 1µm. The coating was transferred to an oven and baked at 60°C for 2 minutes. The roller was then reversed to press the PP base film onto the wet coating at a pressure of 1000Mpa to obtain a composite separator.

### Example 10

This example of the present application provides a fullerene composite separator, comprising a polyethylene base film layer with a thickness of 5µm, an unmodified fullerene material C₆₀ intermediate coating with a thickness of 1µm, and a polypropylene base film layer with a thickness of 6µm, which were sequentially laminated.

Its preparation comprises the following steps:
① The C₆₀, polyacrylate and carboxymethyl cellulose were uniformly mixed in a solvent at a mass ratio of 3:3:1 to form an aqueous slurry with a solid content of 25 wt % and a viscosity of 100 mPa·s to prepare a fullerene slurry.
② The fullerene slurry was coated onto a 5µm polyethylene PE base film by a coating machine. The other unwinding roller was a 5µm polypropylene PP base film. The slurry was applied to one surface of the PE base film by extrusion to form a wet coating with a thickness of about 1µm. The coating was transferred to an oven and baked at 60°C for 2 minutes. The roller was then reversed to press the PP base film onto the wet coating at a pressure of 1000Mpa to obtain a composite separator.

### Comparative example 1

This comparative example provides a double-layer composite separator, using a PE microporous film with a thickness of 5µm and a 6µm PP microporous film as the substrate layers. First, a polycarbosilane PCS polymer coating was sprayed on a 5µm thick PE surface on one side, with a spraying amount of 0.5 mg/m². To ensure consistency with the example, it was first baked at 60° C for 2 minutes and then laminated with the PP base film on the other side at a pressure of 1000 Mpa to obtain a fullerene-free composite separator.

The properties, such as thickness, air permeability, specific surface area, surface density, heat shrinkage rate, and liquid absorption of the composite separators in the above examples and comparative examples were tested respectively, and the test method was as follows:
1. Film thickness measurement: The film thickness of the separator was measured at 5 points within a range of 100 mm × 100 mm using a contact thickness gauge, and the average film thickness was calculated.
2. Air permeability measurement: The air permeability (Gurley value) was measured according to JISP8117:2009, and the gas used in measuring the air permeability was air.
3. Specific surface area measurement: The nitrogen adsorption isotherm of fullerene material was measured on ASAP2020 (Micromeritics), and the specific surface area (SBET) of the isotherm was calculated using the Brunauer-Emmet-Teller method.
4. Surface density measurement: the separator was cut into a circle with a radius R of 50 mm, which was weighed using an electronic balance and calculated for its surface density.
5. Thermal shrinkage rate measurement: The separator was cut into a size of 100×50 mm, placed in an oven at 130°C/1h, and the separator was measured for the shrinkage degree in the directions of the longitudinal tensile rate MD and transverse tensile rate TD using a vernier caliper.
6. Liquid absorption test: The separator sample was cut into a 5cm×5cm square and weighed. Then, the separator was immersed in the electrolyte for 30 minutes, then taken out, the electrolyte on the separator surface was gently absorbed with dust-free paper, and then weighed. The electrolyte used was 1 mol/L LiPF6 ethylene carbonate EC solution. Liquid absorbency = (weight after immersion-weight before immersion) / weight before immersion × 100%.

The test results are shown in Table 1 below:

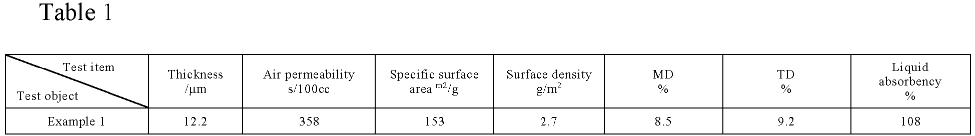

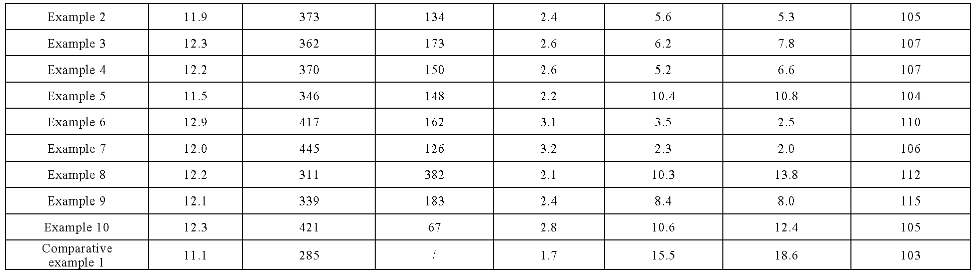

It can be seen from the test results in Table 1 above that the composite separators provided with a fullerene material functional layer prepared in the examples of the present application show improved performance in terms of air permeability, specific surface area, surface density, thermal shrinkage rate, liquid absorbency, etc., compared with the composite separator in Comparative Example 1 which is not provided with a fullerene material layer. Specifically, the composite separators of Examples 1-4 including the fullerene layer doped with a heteroatom have a larger specific surface area than the composite separator of Comparative Example 1 without the fullerene material layer, while the surface density is lower than Comparative Example 1, and the liquid absorbency thereof is also increased to a certain extent. The thickness of the fullerene material layer in the composite separator of Example 5 is only 0.5µm. Although the thickness of the intermediate coating is lower than that of Example 1 (1µm), the properties, such as air permeability, specific surface area, surface density, thermal shrinkage rate, and liquid absorbency are comparable to those of Example 1, and all of the properties are significantly higher than those of the composite separator of Comparative Example 1 which does not have a fullerene material modified layer. Therefore, even if the modified coating containing fullerene is applied at a low thickness in the composite separator, it can still greatly improve the properties, such as air permeability, thermal stability, liquid absorbency of the composite separator, which is beneficial to reduce the use of the fullerene material layer in the composite separator, thereby achieving a lightweight design of the composite separator while ensuring the performance of the separator. In Example 6, increasing the thickness of the fullerene material layer in the composite separator can better improve the various properties of the composite separator.

In Example 7, fullerene is compounded with both α-alumina and N/P co-doping, and the heat resistance is better improved by double layer-modifying the fullerene, while also demonstrating the high specific surface area and good liquid absorption capacity of fullerene. In Example 8, by the monoaddition organic coupling reaction of fullerene and a dimethoxy compound, a C₆₀ fullerene-based porous aromatic framework is formed, which has chemical and thermal stability and also a high specific surface area. Therefore, the composite separator has the highest specific surface area, the lowest surface density and the better liquid absorbency. In Example 9, the highly polar nitro-modified C₆₀ has the function of improving the compatibility between the composite separator and the electrolyte components, thereby increasing the lyophilicity of the composite separator and thus having the best liquid absorbency.

In addition, by comparing Examples 1-9 with Example 10, it can be seen that the composite separator prepared by modifying the fullerene material has certain improvements in properties, such as air permeability, specific surface area, surface density, thermal shrinkage rate, and liquid absorbency. By applying the modified fullerene material with higher performance between the base film layers, it is beneficial to improve the comprehensive properties of the composite separator, such as mechanical property, heat resistance, ion and electron conductivity, and can meet the application requirements with a small amount of fullerene material, and can reduce the thickness of the modified layer in the composite separator, thus facilitating the lightweight design of the composite film.

By designing and preparing batteries, the effect of the fullerene P doping amount on the inhibition of lithium plating during its cycling process is analyzed. The battery preparation steps are as follows:
1. The positive electrode is a lithium iron phosphate LFP material, with active material of the electrode plate accounting for 90%, a binder of polyvinylidene fluoride PVDF accounting for 5%, and a conductive agent accounting for 5%. The electrode plate has a coating weight of 0.175mg/1540mm² and a compaction density of 1.65g/cm³. The electrode plate is prepared by processes such as stirring, coating, and cold pressing.
2. The negative electrode is artificial graphite, with active materials accounting for 80%, a binder of styrene butadiene rubber SBR and a dispersant of sodium carboxymethyl cellulose CMC accounting for 10wt%, and a conductive agent accounting for 10wt%. The electrode plate is prepared by processes such as stirring, coating, and cold pressing, etc., and finally the electrode plate has a coating weight of 0.265mg/1540mm² and a compaction density of 3.45g/cm³. Negative electrode area capacity ratio (N/P=1.01).
3. The separator is the composite separator prepared in the above example, and the electrolyte is an EC solution with a composition of 1M NaPF6.
4. The above electrode plates and electrolyte are assembled into a stacked battery cell, with an aluminum-plastic film as the packaging material.

Lithium plating inhibition test: at a test temperature of 25°C, the lithium-ion battery is charged to 3.6V at a constant current of 1.5C, left to stand for 5 minutes, and then discharged to 2.25V at a constant current of 1.0C. This cycle is repeated 100 times, and short circuits are counted. The test results are shown in Table 2 below:

**Table 2**

| Group | Number of tests | Short circuits |
|---|---|---|
| Example 1 | 20 | 16 |
| Example 2 | 20 | 15 |
| Example 3 | 20 | 15 |
| Example 4 | 20 | 12 |

From the test results in Table 2 above, it can be seen that N/P co-doped fullerene materials can improve the conductivity of the battery. During the operation of the battery, when the dendrites grow and contact C₆₀, the strong electron accepting property and improved conductivity thereof will change the growth direction of the dendrites and prevent the battery from short circuiting. In such a case, the fullerene prepared by adding 10 ml of phytic acid in Example 4 has the best effect of inhibiting lithium plating, which shows that effective element doping improves the conductivity of fullerene and has a better inhibitory effect when contacting lithium dendrites.

Finally, it should be noted that the aforementioned embodiments are only used for explaining the technical solution of the present application, and not for limiting the present application. Although the present application has been described in detail with reference to the aforementioned embodiments, it should understand by those of ordinary skills in the art that the technical solutions described in the aforementioned embodiments can still be modified, or some or all of the technical features can be equivalently replaced. The modifications or replacements do not deviate the nature of the corresponding technical solutions from the scope of the embodiments of the present application, and should all be included in the scope of the claims and specification of the present application. In particular, the technical features mentioned in the various embodiments can be combined in any manner as long as there is no structural conflict. The present application is not limited to the specific embodiments disclosed herein, but rather includes all technical solutions falling within the scope of the claims.

## Claims

1. A composite separator, wherein the composite separator comprises a plurality of laminated base film layers and at least one modified layer provided between two of adjacent base film layers; and raw material components of the modified layer comprise a fullerene material.

2. The composite separator according to claim 1, wherein the raw material components of the modified layer comprise fullerene modified by at least one of doping a heteroatom, modification with an organic functional group, compounding an inorganic material, and pore-making treatment.

3. The composite separator according to claim 2, wherein the thickness of the modified layer is not more than 5µm.

4. The composite separator according to claim 3, wherein the thickness of the modified layer is not more than 3µm.

5. The composite separator according to claim 4, wherein the thickness of the modified layer is 0.5µm-2µm;
and/or the thickness of the base film layer is 3µm-7µm.

6. The composite separator according to any one of claims 2-5, wherein the heteroatom comprises non-metallic elements of the main groups IIIA-VIA;
and/or the organic functional group comprises at least one of a pyrrole group, a thiophene group, and an aniline group;
and/or the inorganic material comprises a metal oxide;
and/or the pore-making treatment is performed by at least one process including pore-making with a pore-making agent, chemical etching, and a template method.

7. The composite separator according to claim 6, wherein the heteroatom comprises at least one of N, S, O, B, and P;
and/or the inorganic material comprises at least one of MoO₂, MgO, and Al₂O₃.

8. The composite separator according to any one of claims 1-7, wherein the fullerene material satisfies at least one of the following features:
the average particle size of the fullerene material is 0.1µm-5µm;
in the fullerene material, the fullerene comprises at least one of C₂₀, C₆₀, C₇₀, C₇₆, and C₈₀;
the shape of the fullerene material comprises at least one of spherical, ellipsoidal, cylindrical, and tubular shapes;
the specific surface area of the fullerene material is 100 m²/g-500 m²/g;
the total pore volume of the fullerene material is 0.01 cm³/g-0.5 cm³/g;
the average mesopore size of the fullerene material is 2 nm-20 nm.

9. The composite separator according to any one of claims 1-8, wherein the modified layer further comprises a binder.

10. The composite separator according to any one of claims 1-9, wherein the base film layer satisfies at least one of the following features:
the porosity of the base film layer is 30%-70%;
the average pore size of the base film layer is 100nm-800nm;
the surface density of the base film layer is 2g/m²-10g/m²;
the base film layer comprises at least one material of polypropylene, polyethylene, glass fibers and polyvinylidene fluoride.

11. The composite separator according to any one of claims 1-10, wherein the composite separator satisfies at least one of the following features:
the air permeability of the composite separator is 300 s/(100 cc)-500 s/(100 cc);
the composite separator has a transverse tensile strength of not less than 1000kg/cm², and a longitudinal tensile strength of not less than 1200kg/cm²;
the thickness of the composite separator is not more than 15µm; and
the mass percentage of the modified layer in the composite separator is 10%-20%.

12. The composite separator according to any one of claims 1-11, wherein the composite separator has a transverse tensile strength of not more than 1700kg/cm², and a longitudinal tensile strength of not more than 1500kg/cm²;
and/or the thickness of the composite separator is not more than 7µm-15µm.

13. A method for preparing a composite separator, comprising the following steps:
preparing a fullerene slurry;
obtaining at least two base film layers, and preparing the fullerene slurry as a modified layer between two of adjacent base film layers to obtain the composite separator.

14. The method for preparing a composite separator according to claim 13, wherein a step of preparing the fullerene slurry comprises: after modifying the fullerene, mixing the fullerene material with a dispersant, a binder and a solvent to form a mixed slurry to obtain the fullerene slurry.

15. The method for preparing a composite separator according to claim 14, wherein the process for modifying the fullerene comprises at least one of: doping with a heteroatom, modification with an organic functional group, compounding an inorganic material, and pore-making treatment.

16. The method for preparing a composite separator according to claim 15, wherein the heteroatom comprises at least one of N, S, O, B, and P;
and/or the organic functional group comprises at least one of a pyrrole group, a thiophene group, and an aniline group;
and/or the inorganic material comprises at least one of MoO₂, MgO, and Al₂O₃;
and/or the pore-making treatment is performed by using at least one process including pore-making with a pore-making agent, chemical etching, and a template method.

17. The method for preparing a composite separator according to any one of claims 14-16, wherein in the fullerene slurry, the mass ratio of the fullerene material, the binder and the dispersant is (60-90):(5-20):(1-20);
and/or in the fullerene slurry, the ratio of the total mass of the fullerene material, the binder and the dispersant to the mass of the solvent is (0.1-0.6): 1;
and/or the binder comprises at least one of carboxymethyl cellulose, styrene butadiene rubber, polyacrylonitrile, polyvinyl alcohol, polytetrafluoroethylene, polyvinylidene fluoride, and polyimide;
and/or the dispersant comprises at least one of polyacrylate, polyacrylamide, and long chain fatty acids;
and/or the solvent comprises at least one of deionized water, N-methyl pyrrolidone, ethanol, dimethylformamide, dimethylacetamide, acetone, and dichloromethane.

18. The method for preparing a composite separator according to any one of claims 13-17, wherein the preparation of the modified layer comprises the steps of: coating the fullerene slurry on one side surface of one of the base film layers, laminating the other base film layer to the surface coated with the slurry, drying and curing to form the modified layer between the two base film layers, so as to obtain the composite separator.

19. The method for preparing a composite separator according to any one of claims 14-18, wherein the thickness of the modified layer is 0.5µm-2µm;
and/or the average particle size of the fullerene material is 0.1µm-5µm;
and/or in the fullerene material, the fullerene comprises at least one of C₂₀, C₆₀, C₇₀, C₇₆, and C₈₀;
and/or the shape of the fullerene material comprises at least one of spherical, ellipsoidal, cylindrical, and tubular shapes.

20. The method for preparing a composite separator according to any one of claims 13-19, wherein the base film layer satisfies at least one of the following features:
the porosity of the base film layer is 30%-70%;
the average pore size of the base film layer is 100nm-800nm;
the surface density of the base film layer is 2g/m²-10g/m²;
the thickness of the base film layer is 3µm-7µm;
the base film layer comprises at least one material of polypropylene, polyethylene, glass fibers and polyvinylidene fluoride.

21. The method for preparing a composite separator according to any one of claims 13-20, wherein the composite separator satisfies at least one of the following features:
the air permeability of the composite separator is 300 s/-500 s/(100 cc);
the composite separator has a transverse tensile strength of not less than 1000kg/cm², and a longitudinal tensile strength of not less than 1200kg/cm²;
the thickness of the composite separator is not more than 15µm; and
the mass percentage of the modified layer in the composite separator is 10%-20%.

22. A battery cell, wherein the battery cell comprises a positive electrode, a negative electrode, a separator and an electrolyte, wherein the separator comprises the composite separator according to any one of claims 1-12, or the composite separator prepared by the method according to any one of claims 13-21.

23. A battery module, wherein the battery module comprises a plurality of battery cells according to claim 22.

24. A battery pack, wherein the battery pack comprises a plurality of battery cells according to claim 22, or the battery module according to claim 23.

25. An electrical device, wherein the electrical device comprises the battery cell according to claim 22, or the battery module according to claim 23, or the battery pack according to claim 24.
